# EUROPÄISCHE PATENTANMELDUNG

(11) **EP 4 635 742 A1**
(43) Veröffentlichungstag der Anmeldung: **22.10.2025**
(21) Anmeldenummer: 25171295.6
(22) Anmeldetag: 17.04.2025
(51) Int. Cl.: B41M 1/12, B41M 1/18, B41M 3/00, C09D 11/037

(54) **ADDITIVES MEHRFARBEN-DRUCKVERFAHREN**

(30) Priorität: 17.04.2024 CH 4022024
(71) Anmelder: Atelier für Siebdruck Lorenz Bögli, 3225 Müntschemier (CH)
(72) Erfinder: BÖGLI, Lorenz, 3147 Mittelhäusern (CH)
(74) Vertreter: Frei Patent Attorneys

(57) **Zusammenfassung**

Es wird ein Mehrfarben-Druckverfahren vorgestellt, bei welchem eine rote, eine grüne und eine blaue Druckfarbe auf einem schwarz gefärbten Substrat (30) aufgebracht werden. Die rote, die grüne und die blaue Druckfarbe weist je mindestens ein Interferenzpigment auf, wobei für jede dieser Druckfarben eine Druckform mit einem feinen Sieb (23) mit mindestens 77 Öffnungen/cm und mit einer das Sieb teilweise bedeckenden Schablone verwendet wird und die rote, die grüne und die blaue Druckfarbe nacheinander je dort, wo das Sieb ihrer Druckform nicht durch die Schablone bedeckt ist, durch die Öffnungen des Siebs auf das schwarz gefärbte Substrat gedrückt wird, um je ein Einfarben-Druckbild zu erzeugen. Durch die Einfarben-Druckbilder, die übereinander gedruckt sind, ergibt sich ein Mehrfarben-Gesamtdruckbild von besonderer Qualität und optischer Anmutung.

## Beschreibung

Die Erfindung betrifft das Gebiet des Mehrfarbendrucks.

Konventionelle Druckverfahren beruhen darauf, dass Druckfarben (Farbstoffe, Pigmente) in den drei Grundfarben, cyan, magenta und gelb sowie in schwarz auf eine helle Fläche, typischerweise weisses Papier, aufgebracht werden. Durch Kombinationen dieser Druckfarben lassen sich im Wesentlichen alle Farbtöne herstellen. Dabei sind die Druckfarben so beschaffen, dass sie als Absorptionsfarben funktionieren. Wenn verschiedene transparente Druckfarben miteinander kombiniert werden, bspw. indem Druckbilder übereinandergelegt werden, verhalten sie sich subtraktiv. Eine ursprünglich helle Fläche, auf der, cyan, magenta und gelb pigmentierte Druckfarben übereinander aufgebracht werden, wird vom Betrachter als schwarz wahrgenommen. Trotzdem wird als praktischen Gründen bei konventionellen Druckverfahren im Allgemeinen eine schwarz pigmentierte Druckfarbe als zusätzliche, vierte Druckfarbe verwendet, woraus sich das CMYK-Farbsystem ergibt (cyan, magenta, yellow, 'key').

Im Gegensatz dazu funktionieren Bildschirme mit einem additiven Farbsystem: Lichtstrahlen der Primärfarben Rot, Grün und Blau (RGB) werden kombiniert, um beliebige Farbtöne zu erhalten. Wenn von einem Bildpunkt her ein roter, ein grüner und ein blauer Lichtstrahl (mit je einer gleichen Intensität) auf das Auge trifft, entsteht die Farbwahrnehmung weiss.

In der WO 2016/124315 A1 wurde vorgeschlagen sogenannte Interferenzpigmente zu verwenden, um mehrfarbige Druckbilder im RGB-Modus zu erhalten. Interferenzfarben nutzen Interferenzeffekte an dünnen Schichten und erzeugen deshalb einen winkelabhängigen Farbeindruck, wirken also irisierend.

Mit irisierenden Pigmenten auf einer schwarzen Fläche aufgebrachte Druckergebnisse zeichnen sich als Lichtdruck mit fordernder Beteiligung des Betrachters aus, indem die gedruckten Farben im Spiel des Lichtwinkels reflektiert werden. Entscheidend zum Verständnis des Funktionierens dieses Lichtdruckes ist das Wissen, dass es sich im Gegensatz bekannter RGB-Farbsysteme wie von Bildschirmen her bekannt um ein passives, reflektierendes Licht handelt. Dieses physikalische Reflexionsverhalten ist auf die Charakteristik der verwendeten irisierenden Pigmente zurückzuführen, welche vollständig transparent und gleichzeitig partiell spektralreflektierend sind.

Eine Eigenschaft von Interferenzpigmenten (irisierenden Pigmenten) ist, dass sie sich additiv verhalten. Interferenzpigmente in den drei Grundfarben Rot, Grün und Blau ergeben übereinander auf schwarzem Untergrund aufgedruckt mindestens im Prinzip die Farbe Weiss. In der WO 2016/124315 A1 wird auch vorgeschlagen, zusätzlich zu Pigmenten in den drei Grundfarben Rot, Grün und Blau auch weisse Interferenzpigmente zu verwenden, um den Weisskontrast zu erhöhen. Der Druck der beiden Grundfarben Rot und Grün übereinander ergibt Gelb (yellow), Rot und Blau ergeben Magenta, und durch den Druck von Blau und Grün übereinander wird der Farbeindruck Cyan erzeugt. In der Praxis zeigt sich jedoch, dass insbesondere der Farbeindruck der Farbe Gelb, erzeugt durch den Überdruck von Rot und Grün, nicht zu überzeugen vermag.

Bei der konkreten Umsetzung des Konzepts "RGB"-Farbdruck zeigt sich, dass es eine Herausforderung ist, einen genügend satten und den Anforderungen an Farbwahrheit genügenden Druck zu erzeugen. Daher haben sich bisher kaum Angebote für diesen Druck auf dem Markt durchgesetzt, trotz der an sich reizvollen und eindrücklichen Bildeindrücke, die sich mit diesem Druckverfahren erzeugen lassen, da sich für den Betrachter das genannte Phänomen eines Lichtdrucks ergibt, d.h. für den Betrachter leuchtet das Substrat, abhängig vom Lichteinstrahlwinkel und dem Betrachtungswinkel.

Es ist daher Aufgabe der vorliegenden Erfindung, Nachteile des Standes der Technik zu überwinden und den RGB-Farbdruck so weiterzuentwickeln, dass er erstens die Vorteile dieses Druckes gut ausnutzt und zweitens diesen für praktische Anwendungen, auch für grössere Druckserien, nutzbar macht.

Diese Aufgabe wird gelöst durch die Erfindung, wie sie in den Patentansprüchen definiert ist.

Gemäss einem Aspekt der Erfindung wird ein Mehrfarben-Druckverfahren zur Verfügung gestellt, bei welchem eine rote, eine grüne und eine blaue Druckfarbe auf einem schwarz gefärbten Substrat aufgebracht werden, wobei die rote, die grüne und die blaue Druckfarbe je mindestens ein Interferenzpigment aufweist, wobei für jede dieser Druckfarben eine Druckform mit einem feinen Sieb mit mindestens 77 Öffnungen/cm und mit einer das Sieb teilweise bedeckenden Schablone verwendet wird und die rote, die grüne und die blaue Druckfarbe nacheinander je dort, wo das Sieb ihrer Druckform nicht durch die Schablone bedeckt ist, durch die Öffnungen des Siebs auf das schwarz gefärbte Substrat gedrückt wird, um je ein Einfarben-Druckbild zu erzeugen und um durch die Einfarben-Druckbilder, indem sie übereinander gedruckt sind, ein Mehrfarben-Gesamtdruckbild zu ergeben.

Im vorliegenden Text wird für die Definition der Feinheit des Siebs die Grösse "Öffnungen/cm" verwendet. Diese entspricht der Grösse "Faden/cm" wie sie im Siebdruck meist verwendet wird, und auch der Grösse oder auch "Maschen/cm". Der Begriff "Öffnungen/cm" wird vorliegend verwendet um dem Umstand Rechnung zu tragen, dass das Sieb zwar als Gewebe im eigentlichen Sinn mit sich kreuzenden Fäden ausgebildet sein kann, dass aber nicht ausgeschlossen ist, dass das Sieb auch bspw. durch Ätzen oder Laserbearbeiten eines dünnen Metallblechs hergestellt werden kann. In diesem Fall sind Fäden im engeren Wortsinn nicht mehr identifizierbar. Dementsprechend wird der Begriff "Öffnung" hier verallgemeinernd für die regelmässig rasterartig angeordneten Durchgangslöcher im Sieb verwendet, sei es als Maschen in einem Gewebe, oder als Löcher in einer blechartigen Struktur.

Das Drucken von Farbe durch ein mit einer Schablone versehenes Sieb hindurch ist als Siebdruck bekannt. Die Verwendung dieses an sich bekannten Verfahrens für den RGB-Druck hat den Vorteil, dass ein bspw. im Vergleich zum Hochdruck oder Tiefdruck relativ intensiver Farbauftrag möglich ist. Allerdings ist eine intrinsische Eigenschaft der Interferenzpigmente, dass sie relativ grobkörnig sind. Dies ist darin begründet, dass die Pigmente als ein plättchenförmiges Trägermaterial mit einer hochbrechenden Beschichtung ausgebildet sind, wobei die Plättchenebene nach dem Druck parallel zur Substratebene liegt.

In der genannten Publikation WO 2016/124315 A1 ist ein Siebdruck als eines der dargestellten Beispiele erwähnt. Allerdings weist das vorgeschlagene Gewebe (Siebgewebe; Sieb) eine Maschenweite von 166 µm auf, entsprechend 60 Faden/cm. Eine solche Maschenweite trägt der Grobkörnigkeit der Pigmente Rechnung und ermöglicht einen für Interferenzpigmente ausreichenden Druckfarbenauftrag.

Weil die Plättcheneigenschaft der Interferenzpigmente für das Entstehen des Farbeindrucks wesentlich ist, ist es auch nicht einfach möglich, die Interferenzpigmente in Form sehr feinkörniger Partikel zur Verfügung zu stellen: es ergibt sich vielmehr eine intrinsische Limite für die Feinheit des Gewebes beim Siebdruckverfahren. Beispielsweise verlangt die Sefar AG (führender Anbieter, von technischen Geweben, wie sie für den Siebdruck verwendet werden, und entsprechender Knowhowträger; gemäss eigenen Angaben weltweit bedeutendster Hersteller von Siebdruckgeweben und Anbieter von Problemlösungen) Maschenöffnungen, die mindestens dem Dreifachen eines Pigmentdurchmesser entsprechen, was bei Pigmenten mit Partikelgrössen zwischen 5 und 50 µm, wie sie für die herstellbaren Interferenzpigmente gegeben sind, einer Maschenweite von mindestens 150 µm entspricht, im Einklang mit WO 2016/124315 (166 µm). Das Sefar Siebdruckhandbuch (deutsche Ausgabe 2023-03-01; 3104-0900-000-1; Sefar AG, Heiden(CH)) gibt im Kapitel 1 unter dem Titel «Maschenweite» an: *«Für das Farbdurchlassvermögen muss die Partikelgrösse der Siebdruckfarbe mindestens um den Faktor 0.3 kleiner sein als die Maschenweite w des Gewebes».* Dabei ist die Maschenweite w definiert als der Abstand zwischen zwei Kett- oder Schussfäden. Er wird gemäss dem genannten Siebdruckhandbuch in der projizierten Gewebeebene gemessen und bestimmt den Grenzwert der Partikelgrösse einer Siebdruckfarbe und beeinflusst die druckbare Feinheit von Strich- und Rasterzeichnungen, das Auslöseverhalten der Farbe und die Dicke des Farbauftrags.

Allerdings sind bei dieser Maschenweite auch die Qualität des Drucks und die erzielbare Auflösung beeinträchtigt. Wohl insbesondere aus diesem Grund wurde bisher bei der Weiterentwicklung des RGB-Druckverfahrens bisher auf Tiefdruckverfahren fokussiert.

Es ist eine Erkenntnis der vorliegenden Erfindung, dass ein Siebdruckverfahren mit einem feineren Sieb mit mindestens 77 Öffnungen/cm, insbesondere mindestens 85 Öffnungen/cm, beispielsweise mindestens 90 Öffnungen/cm oder mindestens 100 Öffnungen/cm oder auch mehr, bspw. 120 bis 140 Öffnungen/cm für den RGB-Druck besonders gute Resultate bringt.

Die Dicken der Faden des Siebs - wenn dieses als Gewebe ausgebildet ist; ansonsten gelten diese Angaben für die durchschnittliche Dicke der Stege zwischen den Sieblöchern (Öffnungen) an der dünnsten Stelle - beträgt bspw. maximal 50 µm, insbesondere 31 µm (dünn).

Für den RGB-Druck mit Interferenzpigmenten und mit einem feineren Sieb mit mindestens 77 Öffnungen/cm oder mindestens 85 Öffnungen/cm kann die Verwendung einer Indirektschablone besonders vorteilhaft sein. Eine Indirektschablone zeichnet sich dadurch aus, dass sie vor dem Übertragen auf das Sieb belichtet und entwickelt wird, d.h. dass das Sieb keinen Einfluss auf die Herstellung der Schablone hat.

Insbesondere für die Herstellung grösserer Serien kann, auch bei mindestens 100 Öffnungen/cm, aber auch die Verwendung einer Direktschablone günstig sein, bei welcher eine Emulsion mit einem lichtempfindlichen Fotopolymer (bspw. eine Diazo-Photopolymer-Emulsion) verwendet wird, welche von Anfang an, d.h. schon während der Belichtung und Entwicklung, im Siebgewebe drin ist.

Eine weitere Erkenntnis betrifft das Druckverfahren per se, nämlich das angewandte Druckprinzip. Es zeigt sich, dass für gewisse Anwendungen ein zylindrisches Druckverfahren bei der Verwendung von feinen Sieben (mit bspw. mindestens 100 Öffnungen/cm) im Zusammenhang mit den Interferenzpigmenten für den RGB-Druck Druckqualität einerseits und Effizienz andererseits besonders gut optimiert. Es zeigt sich, dass ein solches zylindrisches Verfahren, bei welchem eine flache Siebdruckform gegen ein über einen rotierenden Zylinder geführtes Substrat gedrückt und synchron mit dem Zylinder bewegt wird, hohen Qualitätsanforderungen genügt und dabei recht effizient ist. Konventionelle Siebdruckverfahren werden für eine besonders gute Bildqualität meist im Flachdruck (Fläche gegen Fläche) ausgeführt, wobei auch schon der zylindrische Druck (Zylinder gegen Fläche; nach dem Stoppzylinderprinzip; mit einem flachen Sieb) und der rotative Druck (Zylinder gegen Zylinder; mit einem Sieb, das entlang der Mantelfläche eines der Zylinder geführt ist) für den Siebdruck umgesetzt werden.

Überraschenderweise zeigt sich auch, dass der besonders effiziente rotative Druck für die Anforderungen an den RGB-Druck mit hohen Qualitätsanspriiche und mit Sieben von bspw. mindestens 100 Öffnungen/cm geeignet ist, was man aufgrund der Grobkörnigkeit der Interferenzpigmente (mit Durchmessern von 5 bis 50 Mikrometern) und dem erforderlichen dicken Farbauftrag an sich nicht erwarten würde.

In Ausführungsformen wird für ein rotatives Druckverfahren ein Metallsieb verwendet, bspw. ein galvanisiertes Metallsieb, insbesondere ein galvanisiertes Metallgewebe.

In Ausführungsformen weist das Sieb eine 0°-Bespannung auf, d.h. Siebfäden verlaufen parallel zur Zylinderachse des vom Sieb gebildeten Zylinders, sowie in Umfangsrichtung. Dadurch wird die Anordnung besonders stabil. Es zeigt sich, dass auch bei Verwendung eines feinen Siebs mit bspw. mindestens 100 Öffnungen/cm und mit 0°-Bespannung ein moiréfreier Druck möglich ist, auch wenn bei Interferenzpigmenten alle vier Grundfarben moiréfähig sind.

Auch die Wahl eines geeigneten Bindemittels in der Druckfarbe ist von Bedeutung. In einer Gruppe von Ausführungsformen wird ein Lösungsmittel verwendet. Das hat den Vorteil, dass das Bindemittel nach dem Auftrag vollständig verdunstet. Ausserdem lässt sich durch Verwendung eines Lösungsmittels eine besonders innig verbundene Druckfarbe herstellen, d.h. die grobkörnigen Interferenzpigmente sind gut in der Masse dispergiert.

Es zeigt sich jedoch, dass auch mit Druckfarben gute Resultate möglich sind, welche eine UV-aushärtendes Bindemittel aufweisen, d.h. ein Bindemittel, welches durch Bestrahlung mit Ultraviolettstrahlung vernetzt. UV-aushärtende Bindemittel haben den Vorteil, dass keine hochflüchtigen Inhaltsstoffe nötig sind, welche aus Gründen des Schutzes von Mensch und Umwelt manchmal unerwünscht sind. In Druckfarben mit einem UV-aushärtenden Bindemittel sind die grobkörnigen Interferenzpigmente vor der Aushärtung jedoch viel weniger innig mit den übrigen Komponenten der Druckfarbe vermischt als beispielsweise bei lösungsmittelbasierten Druckfarben, d.h. die Interferenzpigmente tendieren dazu, auszuscheiden. In Verbindung mit feinen Drucksieben tendieren diese Druckfarben dazu sich während des Druckprozesses zu entmischen, indem die Pigmente am Sieb zurückgehalten werden und dieses mit der Zeit verstopfen. Trotzdem hat sich überraschend gezeigt, dass insbesondere für den rotativen Druck, bei welchem die Druckfarbe mittels eines Rakels durch ein zylindrisches Sieb gedrückt wird, mit Druckfarben, die ein UV-aushärtendes Bindemittel enthalten, gute Resultate erzielt werden können, wenn das Sieb eine Feinheit von mehr als 100 Öffnungen/cm aufweist.

Beim RGB-Druckverfahren wird der Farbeindruck 'Gelb' erzeugt, indem die Farben Rot und Grün übereinander gedruckt werden. Bei der praktischen Umsetzung kann es jedoch eine Herausforderung sein, dadurch einen Farbeindruck zu erzeugen, der durch den Betrachter tatsächlich als Gelb wahrgenommen wird. Aus diesem Grund hat die US 2006/70082844 A1 vorgeschlagen, Gelb oder Golden als zusätzliche, vierte bunte Druckfarbe zu verwenden und dadurch den Gamut zu vergrössern. In der genannten WO 2016/124315 A1 wird im Gegensatz dazu vorgeschlagen, auf Gelb als zusätzliche Druckfarbe zu verzichten und Gelb durch den Überdruck von Rot und Grün zu erzeugen, wobei als Farben Rot mit einem Farbtonwinkel hᵤᵥ zwischen 1° und 20° und mit einer Sättigung sᵤᵥ≥0.6 und Grün mit einem Farbtonwinkel hᵤᵥ zwischen 110° und 150° mit einer Sättigung sᵤᵥ≥0.4 verwendet werden. Für die blaue Druckfarbe wird ein Farbtonwinkel zwischen 210° und 280° und eine Sättigung sᵤᵥ≥1.2 angegeben Als Beispiele werden Druckfarben mit den Pigmenten Pyrisma T30-21 Red, Pyrisma T30-24 Green und Pyrisma T30-23 Blue erwähnt, jeweils gemäss CIELUV-Farbraumsystem, mit Beleuchtungswinkel 45° und Beobachtungswinkel im Abstand zum Glanzwinkel 25° gemessen, bei vollflächiger Beschichtung eines schwarzen Papiers durch die Druckfarbe.

Obwohl in der WO 2016/124315 A2 der Anspruch erhoben wird, dass mit dem dort präsentierten Ansatz durch Druck Farbtöne im gesamten Farbraum erzeugt werden können, zeigt sich jedoch, dass für das Erzeugen eines gelben Farbeindrucks auch mit den in WO 2016/124315 A2 angegebenen Mitteln keine vollständig befriedigende Lösung gefunden wurde. Der durch Überdruck von rot und grün erzeugte Farbeindruck hat je nach Farbverhältnis einen deutlichen Grün- oder Graustich. Ein klares Gelb lässt sich nicht erzeugen.

Es ist eine Erkenntnis der vorliegenden Erfindung, dass der Farbeindruck markant verbessert werden kann, indem als rote Druckfarbe eine Druckfarbe mit Interferenzpigmenten besonders hoher Sättigung sᵤᵥ verwendet wird. Die Sättigung sᵤᵥ ist im CIELUV-Farbsystem definiert als sᵤᵥ=13*√((u'-u'ₙ)²+(v'-v'ₙ)⁷), d.h. sie ist ein Mass für den Abstand zum Unbuntpunkt (u'ₙ,v'ₙ). Es zeigt sich, dass für das Erzeugen eines klaren Gelbtons nicht etwa primär der Farbtonwinkel der Farben Rot und Grün zu korrigieren ist, wie das aufgrund der Farbmetrik zu erwarten wäre (bspw. würde eine Betrachtung der u'v'-Farbebene nach dem CIELUV-System eine Vergrösserung des Farbtonwinkels für den roten Farbton und/oder eine Verkleinerung des Farbtonwinkels für den grünen Farbton nahelegen), sondern eben die Sättigung des roten Interferenzpigments. Beispielsweise kann es von Vorteil sein, wenn der Sättigungswert des roten Interferenzpigments und damit der roten Druckfarbe markant grösser als der Sättigungswert sᵤᵥ des grünen Interferenzpigments ist, beispielsweise mindestens 1.6-mal so hoch oder mindestens 1.8-mal so hoch oder gar mindestens doppelt so hoch. Es kann auch von Vorteil sein, wenn der Sättigungswert des roten Interferenzpigments auch grösser ist als derjenige des blauen Interferenzpigments.

In diesem Text ist mit CIELUV-System das CIELUV-Farbraumsystem (1976) gemeint; siehe bspw. K. Schläpfer, "Farbmetrik in der grafischen Industrie", dritte Auflage, UGRA 2002. Auch auf das normierte CIELAB-Farbsystem (CIE 1976 L*a*b* Colour space) wird in diesem Text Bezug genommen, siehe ebenfalls K. Schläpfer, "Farbmetrik in der grafischen Industrie", dritte Auflage, UGRA 2002. Messungen entsprechen der Norm D50/10, d.h. Normlichtart D50 (Tageslicht von 5000 K), Betrachtungswinkel 10°.

Insbesondere sind für das rote Interferenzpigment Sättigungswerte sᵤᵥ von mindestens 0.9, insbesondere mindestens 1.1 und beispielsweise von 1.2 oder mehr oder gar mindestens 1.3 von Vorteil. Nach oben ist der Sättigungswert sᵤᵥ durch die Begrenzung des Farbraums in der Farbebene theoretisch begrenzt, wobei das theoretische Maximum in der Realität nicht ganz erreicht werden kann.

Im CIELAB-System (Messungen mit Lichtquelle D50; Betrachterwinkel 10°) kann der Chroma-Wert der Rot gedruckten Stellen mindestens 25, bevorzugt mindestens 30, beispielsweise zwischen 34 und 42, betragen. Der entsprechende Chroma-Wert für Grün beträgt im Allgemeinen zwischen 22 und 30, und der Chroma-Wert für Grün ist bspw. um mindestens 20% tiefer als derjenige für Rot. Der Chroma-Wert für Blau zwischen kann zwischen 40 und 50, bspw. zwischen 30 und 45 liegen. Der entsprechende (CIELAB-) Farbtonwinkel h beträgt bevorzugt für Rot zwischen 10° und 30°, insbesondere zwischen 19° und 25°. Für Grün beträgt der Farbtonwinkel insbesondere zwischen 150° und 170°, für Blau zwischen 265° und 285°, insbesondere zwischen 270° und 280°. Insgesamt sind die Farbtonwinkel der drei Farbtöne im Unterschied zum Stand der Technik in guter Näherung gleichverteilt, d.h. die Unterschiede zwischen zwei beliebigen der drei Farbtonwinkel betragen nicht weniger als 90° und nicht mehr als 150°, insbesondere zwischen 100° und 140°. Die Helligkeit L der Rot gedruckten Stellen kann zwischen 20 und 60, insbesondere zwischen 32 und 50 betragen, die Helligkeit L der Grün gedruckten Stellen zwischen 40 und 70, insbesondere zwischen 45 und 65, und die Helligkeit L der Blau gedruckten Stellen zwischen 25 und 65, insbesondere zwischen 35 und 55.

Zusätzlich zu den Druckfarben Rot, Grün und Blau kann auch Weiss als vierte Farbe verwendet werden, um den Kontrast und die Leuchtkraft der weiss gedruckten Stellen zu erhöhen. In Ausführungsformen wird dabei bei Vorbereitung des Drucks eine Farboptimierung so vorgenommen, dass jede Bildteilfläche - also bspw. jeder Bildpunkt - maximal drei Buntfarben aufweist - d.h. Verdunkelungen werden durch das Zusammenspiel des schwarzen Untergrunds mit der Druckfarbe weiss erzeugt und nicht nur durch die additive Mischung der drei Buntfarben. Dadurch gewinnt die Bilderzeugung an Prägnanz, auch kann unter Umständen Druckfarbe eingespart werden. Die Verwendung von geringeren Mengen an Druckfarbe hat auch den Vorteil, dass die Trocknung bzw. Aushärtung viel besser und einfacher ist als wenn drei oder mehr volle Druckfarbenschichten aufgetragen werden. Bei der Verwendung eines UVaushärtbaren Bindemittels gilt ausserdem: ein dreimaliger UV-Farbauftrag ergibt ein gedrucktes Relief, welches bei einem vierten Druckdurchgang einen Kontakt der Druckrakel zum Substrat verhindert und so ausgerissene, nicht gedruckte Bildteile ergeben kann. Auch im Hinblick darauf kann die genannte Farboptimierung von Vorteil sein.

Es zeigt sich, dass für die Farbseparation ein softwarebasiertes Verfahren verwendet werden kann, wie es für den CMYK-Druck bekannt ist, jedoch anhand der farbinvertierten Bilddaten, wobei die die für schwarz ermitteltem Farbseparation für den Weisskanal übernommen werden kann.

Das Erzeugen eines Druckbildes mit dem hier gelehrten Vorgehen kann folgende Schritte umfassen:
Zunächst wird eine Farboptimierung und Farbseparation durchgeführt. Das Verfahren geht von einem digitalen RGB-Bild aus, das mittels einer Bildverarbeitungssoftware für den nachfolgenden Druck optimiert wurde, indem jede bunte Bildteilfläche jeweils maximal zwei Buntfarben aufweist (für einen sogenannten Unbuntaufbau nach Küppers; in unbunten Teilflächen können auch mehr als zwei Druckfarben übereinander gelegt werden. Dieses optimierte digitale RGB-Bild wird farblich invertiert und durch eine geeignete Computersoftware (bspw. Adobe Photoshop^{®}) als Farbnegativ separiert. Die entstehenden Farbseparationen werden als Volltonfarbkanäle rot, grün und blau sowie (entsprechend dem Schwarzkanal im CMYK-Modus des Farbnegativs) RGB-Weiss gespeichert.

Bei der Verwendung von Indirektschablonen wird für jede der vier Farbseparationen Rot, Grün, Blau und Weiss werden Druckfilme in einer 40 L/cm oder 48 L/cm-Rasterweite klassisch belichtet. Mit diesen werden im an sich bekannten Verfahren Schablonen erzeugt, die nach dem Entwickeln auf das Sieb übertragen werden.

Wenn man mit Direktschablonen arbeitet, erfolgt die Belichtung und Entwicklung der Emulsion mit lichtempfindlichem Fotopolymer direkt am Siebgewebe, d.h. die das Sieb mindestens teilweise bedeckende Schablone wird direkt auf dem Sieb gefertigt.

Die verwendeten Druckfarben sind wie erwähnt in Ausführungsformen Lösungsmittel-basiert, d.h. die Farben werden durch Verdunsten des in der Druckfarbe enthaltenen, von Wasser verschiedenen Lösungsmittels fest. Damit unterscheiden sie sich von UV-härtenden Farben, bei denen sich beim Aushärten ein das Pigment überdeckender Lackfilm bilden kann, und auch von wasserbasierten Acrylsystemen. Die verwendeten Lösungsmittel basieren bspw. auf Estern und/oder und Ketonen.

In alternativen Ausführungsformen enthalten die Druckfarben als Bindemittel - bzw. als mindestens eines der Bindemittel - ein UV-aushärtendes Bindemittel, d.h. bspw. einen UV-Lack.

Als Farbrezeptur kann bspw. verwendet werden (die Prozentangaben beziehen sich auf das Volumen der Rasterpaste, also nicht auf das Gesamtvolumen): Rasterpaste (für den Siebdruck handelsübliche Rasterpaste): 100%, langsamer, lösender Verdünnner: 30%; Pigmente: 15% bzw. 20% bzw. 25%.

Für die Farbe Rot kann in einer Ausführungsform bspw. folgendes Rezept verwendet werden: Rasterpaste 100%, Verdünner (auf Ester- und/oder und Ketonbasis) 30% Pigment Colorstream^{®} F10-51 Lavared (Merck): 15%. Dieses Interferenzpigment bewirkt die Färbung in Rot mit hoher Sättigung.

Für die Farbe Grün kann bspw. folgendes Rezept verwendet werden: Rasterpaste 100%, Verdünner 30%, Interferenzpigment Pyrisma^{®} Colorspace T30-21 Green 25% (Merck).

Die Druckfarbe blau kann bspw. folgende Zusammensetzung aufweisen: Rasterpaste 100%, Verdünner 30%, Interferenzpigmente Pyrisma^{®} Colorspace T30-12 Blue 12.5%, Pyrisma^{®} T30-27 Indigo 12.5%.

Druckfarbe weiss: 100% Rasterpaste, 30% Lösungsmittel, 20% Interferenzpigment Iriodin^{®} 6107 Icy white.

Wenn ein UV-härtbares Bindemittel verwendet wird, kann dieses bspw. als flüssiger Lack vorliegen. Dabei zeigt es sich als vorteilhaft, wenn die Konzentration (jeweils in Gewichtsprozent, auf 100% Lack) des Interferenzpigmentes besonders hoch ist,. Für Lavared kann sie mindestens 15% auf 100% Lack betragen, bspw. mindestens 18%, für die grün und blau je mindestens 25%, bspw. mindestens 30% und für weiss mindestens 18%, bspw. mindestens 20%.

Die angegebenen Konzentrationen sind bloss beispielhaft; es können auch geringere oder höhere Konzentrationen der Interferenzpigmente zum Einsatz kommen.

Als Substrat wird ein Papier verwendet, das tiefschwarz eingefärbt ist und eine gestrichene, glatte Oberfläche aufweist. Es zeigt sich, dass die Glattheit der Oberfläche im Zusammenhang mit dem Siebdruck von Interferenzpigmenten optimal ist, da durch die Glattheit der Oberfläche die Orientierung der irisierenden Pigmente gleichmässig und gerichtet wird, und dass das zu einer erhöhten wahrgenommenen Farbsättigung führt.

Besonders vorteilhaft sind Papiere mit Rz-Werten von weniger als 10 µm (entsprechend Ra-Werten von maximal ca. 2 µm), bspw. maximal N8. In einem Beispiel wird gestrichenes, schwarzes Papier mit einem Rz-Wert von weniger als 7, nämlich ca. 6.3 verwendet. Die Verwendung Papier mit Rz-Werten von mehr als 10, bspw. von ungestrichenem Papier (Naturpapier) ist jedoch nicht ausgeschlossen und kann sogar besonders reizvolle optische Eindrücke bewirken.

Die im vorliegenden Text beschriebenen Verfahren, insbesondere im rotativen Druck, aber auch im Zylinderdruck, eignen sich in hervorragender Weise auch für das Drucken von Urkunden, bspw. Banknoten, Wertpapieren oder Ausweisen. Dies beruht erstens auf der Erkenntnis, dass der besondere irisierende Farbeindruck, den ein RGB-Druck erzeugen kann, durch gängige Kopierverfahren nicht kopierbar ist. Es entsteht mithin ein auch für den Laien sehr einfach überprüfbares Sicherheitsmerkmal, wenn ein Bereich einer Urkunde mit dem vorliegend beschriebenen Verfahren gedruckt wird. Zweitens beruht das auf der Erkenntnis, dass durch die Verwendung von Drucksieben mit einer Feinheit von mindestens 77 L/cm, insbesondere mindestens 100 L/cm, auf verlässliche und in hoher Geschwindigkeit Motive gedruckt werden können, deren Feinheit sich für Urkunden, insbesondere Banknoten, eignen.

Aus diesem Grund betrifft die vorliegende Erfindung auch die Verwendung eines Verfahrens wie im vorliegenden Text beschrieben und definiert, für den Druck von Urkunden, insbesondere Banknoten.

Kurze Beschreibung der Figuren:
- Figur 1: zeigt eine u'v'-Farbtafel nach dem CIELUV (1976)-System;
- Figur 2: zeigt schematisch Elemente einer Maschine zum Durchführen des Verfahrens; und
- Figur 3: zeigt schematisch Elemente einer weiteren Maschine zum Durchführen des Verfahrens.

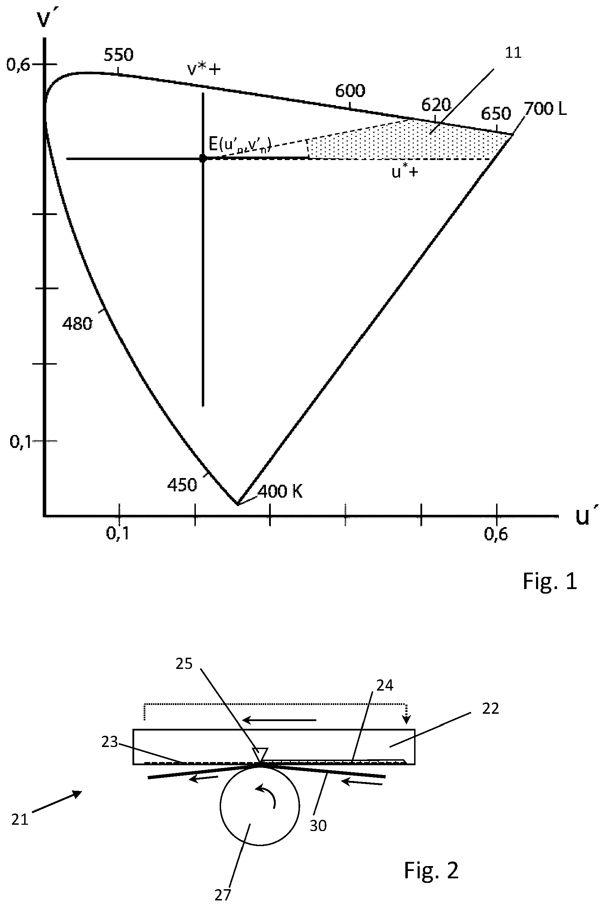

Die Farbtafel gemäss **Figur** 1 beinhaltet den Unbuntpunkt E(u'ₙ,v'ₙ). Die Farbtonwinkel hᵤᵥ gemäss dem vorliegenden Text werden in Bezug auf die von diesem ausgehende Achse horizontal nach rechts definiert (u^{*}+ in der Figur; u^{*} ist ein von der Helligkeit abhängiges Vielfaches von u'-u'ₙ, und wird im vorliegenden Text nicht weiter verwendet; ebensowenig wie die auch von der Helligkeit abhängige Buntheit (Chroma)).

In der Farbtafel ist ein Gebiet 11 mit roten Farbtönen und einer vergleichsweise grossen Sättigung sᵤᵥ markiert. sᵤᵥ=13*√((u'-u'ₙ)²+(v'-v'ₙ)²) ist direkt proportional zum Abstand vom Umbuntpunkt E. Die Verwendung von roten Pigmenten aus diesem Bereich, mit hohen Sättigungswerten, hat sich als vorteilhaft erwiesen, obwohl die Sättigung sᵤᵥ der erhältlichen grünen Pigmente (in der Farbtafel oben links vom Unbuntpunkt E positioniert) im Allgemeinen deutlich kleiner ist.

**Figur** 2 zeigt sehr schematisch ein Teil einer Maschine 21 zur Durchführung des Verfahrens. Eine Druckform 22 mit einem Sieb 23 und mit pastöser Druckfarbe 24 wird für das Druckverfahren bewegt, in Richtung des oberhalb der Druckform angezeigten Pfeils. Eine rotationszylindrische Walze 27 drückt das Substrat 30, nämlich schwarzes Papier, das oberseitig (auf der der Druckform zugewandten Seite) glatt und gestrichen ist gegen das Sieb 23. Die Walze dreht mit einer Umfangsgeschwindigkeit, welche der Geschwindigkeit der Druckform entspricht, so dass es zwischen Sieb 23, Substrat 30 und Walze 27 keine Relativbewegung gibt, sich die Kontaktstelle zwischen Sieb 23 und Substrat - im Wesentlichen eine Linie senkrecht zur Darstellungsebene in Fig. 2 - aber während des Druckverfahrens entlang der Oberflächen des Siebs 23 und des Substrats 30 bewegt. Auf geeignete Weise, bspw. mittels eines stillstehenden Rakels 25 wird die Druckfarbe 24 durch das Sieb 23 an der Kontaktstelle auf das Substrat gebracht. Wenn die Druckform eine Endposition erreicht hat, wird das Sieb vom Substrat abgehoben und gleichzeitig die Walze 27 mit dem Substrat 30 angehalten und dann die Druckform an die Ausgangsposition zurückbewegt, woraufhin sie wieder mit dem Substrat in Kontakt gebracht und der Druckvorgang fortgesetzt wird (gepunktet dargestellter Pfeil). Der Farbauftrag kann abweichend von der Darstellung von Fig. 2 auch kontinuierlich erfolgen bspw. unmittelbar vor dem Rakel 25 oder indem ein kombiniertes Farbauftrag-Rakel-Werkzeug verwendet wird etc.

Es zeigt sich, dass dieses maschinelle Verfahren, welches an sich aus der Drucktechnik bekannt ist, für den Auftrag von RGB-Farben auf einem dunkel eingefärbten Substrat besonders vorteilhaft ist. Die Effizienz ist viel grösser als bei einem Fläche-auf-Fläche-Druck.

Gemäss einer Variante des anhand von Fig. 2 schematisch beschriebenen Verfahrens kann anstatt auf in Form einer (Endlos-)Rolle vorhandenen Papier auch auf Papierbögen gedruckt werden. Solche Bögen können bspw. in ihrer Länge auf den Umfang der Walze 27 angepasst sein, d.h. der Walzenumfang kann bspw. einer Bogenlänge entsprechen. Wie an sich bekannt kann bspw. auch mit Vakuum gearbeitet werden, damit die Bögen an der Walzenoberfläche leicht anhaften.

Auch für den Rotationssiebdruck ist der erfindungsgemässe Ansatz geeignet. Dieser zeichnet sich dadurch aus, dass noch höhere Druckgeschwindigkeiten erreichbar sind.

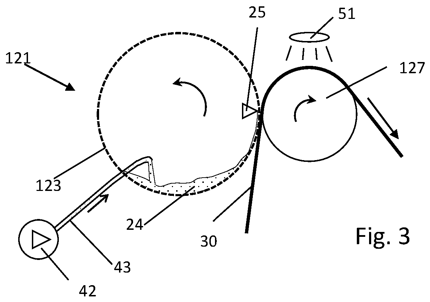

**Figur 3** zeigt schematisch einen Teil einer entsprechenden Rotationsdruckmaschine 121. Es wird ein zylindrisches, rotierendes Sieb 123 verwendet, das beispielsweise mit einem nicht-mitrotierenden Rakel 25 zusammenwirkt. Das zu bedruckende Substrat 30 wird dort, wo es bedruckt wird, zwischen dem zylindrischen Sieb 123 und einer Gegenwalze 127 zusammengedrückt und dabei transportiert. Fig. 3 zeigt auch sehr schematisch eine UV-Belichtungsvorrichtung 51, durch welche das Substrat nach dem Bedrucken bestrahlt wird um das Bindemittel auszuhärten. In der Regel werden vier Stationen der in Fig. 3 dargestellten Art vom Substrat 30 nacheinander durchlaufen, um die auf Interferenzpigmenten basierenden Druckfarben rot, grün, blau und weiss (beispielsweise in dieser Reihenfolge) aufzubringen.

Die Zuführung der Druckfarbe 24 erfolgt insbesondere ins Innere des rotierenden Siebs 123, wobei in Fig. 3 sehr schematisch eine Druckfarbenleitung 43 und eine Druckfarbenpumpe 42 dargestellt sind. Die Druckfarbe kann bspw. aus einem Druckfarben-Speichergefäss (in Fig. 3 nicht dargestellt) erfolgen, dessen Inhalt ständig mechanisch umgerührt wird, um ein Scheiden von Interferenzpigmenten und Bindemittel zu verhindern.

Es zeigt sich, dass auch bei Verwendung von Druckfarben mit Interferenzpigment und UV-aushärtendem Bindemittel und der damit verbundenen raschen Entmischung ein sehr guter Druckauftrag möglich ist, unter anderem indem das rotierende, feine Sieb 123 (mit mindestens 100 Öffnungen/cm) zusammen mit dem Rakel 25 eine ad-hoc-Mischvorrichtung bildet.

Aus diesem Grund hat sich überraschend gezeigt, das auch bei einem rotativen Verfahren bei Verwendung der grobkörnigen und in einer gewissen Dicke aufzutragenden Interferenzpigmente eine gute sehr Druckqualität erzielt werden kann.

### Beispiele: Siebdruck mit Druckfarben

Es wurden acht verschiedene Drucke 1 bis 8 auf schwarzem Papier erstellt, nach den vorstehend aufgeführten Rezepten für Rot, Grün, Blau (und Weiss). An Teilflächen mit den Druckfarben Rot, Grün und Blau wurden Messungen (D50/10) vorgenommen. Ausserdem wurden Vergleichsdrucke V1 bis V6 erstellt, wobei das Interferenzpigment für die rote Druckfarbe durch das Interferenzpigment Pyrisma Colorspace T40-21 Red ersetzt wurde. Die Resultate werden in nachstehender Tabelle wiedergegeben:

| **Druck** | Rot L | Rot C | Rot h | Gr. L | Gr. C | Gr. h | Bl. L | Bl. C | Bl. h |
|---|---|---|---|---|---|---|---|---|---|
| **1** | 40 | 36 | 22 | 60 | 28 | 162 | 43 | 41 | 278 |
| **2** | 39 | 34.5 | 21 | 54 | 26 | 160 | 43 | 41 | 272 |
| **3** | 40 | 36 | 21 | 57 | 29 | 154 | 42 | 41 | 272 |
| **4** | 36 | 30 | 20 | 51 | 27 | 161 | 37 | 36 | 278 |
| **5** | 44 | 40 | 24 | 64 | 24 | 163 | 53 | 34 | 278 |
| **6** | 42 | 40 | 24 | 63 | 24 | 164 | 54 | 33 | 278 |
| **7** | 35 | 32 | 20 | 54 | 27 | 161 | 40 | 41 | 278 |
| **V1** | 40 | 16 | 360 | 47 | 22 | 154 | 37 | 34 | 274 |
| **V2** | 45 | 19 | 4 | 51 | 24 | 154 | 38 | 36 | 274 |
| **V3** | 44 | 18 | 8 | 51 | 26 | 158 | 38 | 39 | 277 |
| **V4** | 46 | 17 | 14 | 52 | 24 | 163 | 41 | 34 | 280 |
| **V5** | 39 | 19 | 2 | 45 | 25 | 157 | 33 | 39 | 278 |
| **V6** | 41 | 23 | 15 | 54 | 27 | 159 | 40 | 37 | 278 |

In der Tabelle bezeichnet "gr." die Farbe grün und "bl." die Farbe blau. L, C und h sind die CIELAB-Koordinaten L* (Helligkeit), C_{ab}* (Buntheit) und h_{ab} (Farbtonwinkel) im CIELAB-System.

Es zeigt sich, dass ein Überdruck von Rot und Grün bei den Druckproben 1 bis 7 ein viel klareres Gelb ergibt als bei den Vergleichsdrucken. Die vorstehende Tabelle zeigt, dass die Chroma-Werte C für die Druckproben 1 bis 7 konsistent deutlich höhere Chroma-Werte - im CIELAB-Farbsystem aufweisen, als die Vergleichsdrucke V1 bis V6. Ausserdem sind die Farbtonwinkel im CIELAB-System konsistent im Bereich zwischen 20° und 24°, und somit sind die Farbtonwinkel von Rot, Grün und Blau näher an einem Auseinanderliegen um jeweils 120° - d.h. einer näherungsweisen Gleichverteilung - als bei den Vergleichsdrucken. Die Messungen bestätigen also, dass es von Vorteil ist, wenn die Druckfarbe Rot höhere Chroma-Werte und damit auch eine höhere Sättigung aufweist als die Druckfarbe Grün - und höhere Chroma-Werte als die für entsprechende Druckfarbe aus der für den Zweck des RGB-Drucks kommerziell angebotene Druckfarbe aus der Pyrisma^{®}-Serie und der Spectraval^{™}-Serie.

### Beispiel: Rotationsdruck

Auf einer Vierfarben-Rotationsdruckmaschine (Gallus) wurde ein Wertpapiersujet wiederholt auf 1'000 Laufmeter schwarzes, selbstklebendes Material von Ritrama vierfarbig mit den in diesem Text beschriebenen Farben und mit einem UV-aushärtenden Bindemittel RGB gedruckt. Die Geschwindigkeit betrug bis zu 60 m/min. Das für das zylindrische Sieb (Breite des Zylinders: 70 cm, Umfang; 70 cm) verwendete galvanisierte Metallgewebe (in 0° auf die Rotationsdruckformen gespannt) hatte eine Gewebefeinheit von 120 L/cm, was einer Maschenöffnung von ca. 51 µm entspricht und damit sehr viel feiner ist als was für Pigmente mit von 5-35 µm (Pyrisma), 5-50 µm (Lavared) bzw. 5-40 µm (Icywhite) als machbar gilt (Regel für den CMYK-Druck: die Maschenöffnungen sollten mindestens dreimal so gross sein wie die Partikelgrössen der Pigmente).

Trotzdem konnten die ganzen 1'000 Laufmeter ohne mechanischen Reinigungsstops zum Reinigen des Gewebes gedruckt werden. Die für die vier Einfarben-Druckbilder verwendeten Raster hatten eine Feinheit von 100 Linien/inch. Es ergab sich eine hervorragende Druckqualität über die ganze Länge des bedruckten Substrats. Das Bindemittel wurde durch das Durchdrücken durch das feine Sieb nicht von den Pigmenten getrennt durch das Sieb durchgearbeitet, sondern es ergab sich ein gleichmässiger Farbauftrag.

### Beispiel: Druck mit feinem Sieb

Mit den Pigmenten und dem Bindemittel gemäss dem vorstehenden Beispiel wurde auch ein Druck (Banknotendruck) mit einem sehr feinen Sieb mit 140 Faden/cm gedruckt; Gewebeöffnung 30 µm. Obwohl nicht alle Pigmentpartikel überhaupt durch diese Gewebeöffnung passen, war auch mit diesen Parametem ein Druck mit hervorragender Qualität möglich, d.h. es ergab sich keine Verstopfung des Siebes.

## Patentansprüche

1. Mehrfarben-Druckverfahren, bei welchem eine rote, eine grüne und eine blaue Druckfarbe auf einem schwarz gefärbten Substrat (30) aufgebracht werden, wobei die rote, die grüne und die blaue Druckfarbe (24) je mindestens ein Interferenzpigment aufweist, wobei für jede dieser Druckfarben (24) je eine Druckform mit einem Sieb (23, 123) mit mindestens 77 Öffnungen/cm und mit einer das Sieb (23, 123) mindestens teilweise bedeckenden Schablone verwendet wird, und die rote, die grüne und die blaue Druckfarbe nacheinander je dort, wo das Sieb (23, 123) ihrer Druckform nicht durch die Schablone bedeckt ist, durch die Öffnungen des Siebs auf das schwarz gefärbte Substrat (30) gedrückt wird, um je ein Einfarben-Druckbild zu erzeugen und um durch die Einfarben-Druckbilder, indem sie übereinander gedruckt sind, ein Mehrfarben-Gesamtdruckbild zu ergeben.

2. Mehrfarben-Druckverfahren nach Anspruch 1, wobei das Sieb (23, 123) mindestens 90 Öffnungen /cm, beispielsweise mindestens 100 Öffnungen/cm aufweist.

3. Mehrfarben-Druckverfahren nach einem der vorangehenden Ansprüche, wobei das Substrat (30) eine gestrichene Oberfläche aufweist und die Einfarben-Druckbilder auf die gestrichene Oberfläche gedruckt werden.

4. Mehrfahren-Druckverfahren nach einem der vorangehenden Ansprüche, wobei zusätzlich zu den Einfarben-Druckbildern in roter, grüner und blauer Farbe auch ein Einfarben-Druckbild in weisser Farbe aufgedruckt wird, wobei beispielsweise genau vier Druckfarben, rot, grün, blau und weiss, für das Erzeugen des Mehrfarben-Gesamtdruckbilds verwendet werden., und/oder wobei beispielsweise die rote, die grüne, die blaue und die weisse Druckfarbe in dieser Reihenfolge nacheinander aufgebracht werden.

5. Mehrfarben-Druckverfahren nach einem der vorangehenden Ansprüche, wobei die rote Druckfarbe im CIELUV-System eine Sättigung sᵤᵥ von mindestens 1.0 aufweist, und/oder wobei die rote Druckfarbe im CIELUV-System eine Sättigung aufweist, die mindestens 1.6-mal so gross ist wie die Sättigung der grünen Druckfarbe.

6. Mehrfarben-Druckverfahren nach einem der vorangehenden Ansprüche, wobei im CIELUV-System die rote Druckfarbe einen Farbtonwinkel hᵤᵥ zwischen 0° und 15° und eine Sättigung sᵤᵥ von mindestens 1.1, die grüne Druckfarbe einen Farbtonwinkel hᵤᵥ zwischen 90° und 170° und eine Sättigung sᵤᵥ von mindestens 0.4, und/oder die blaue Druckfarbe einen Farbtonwinkel hᵤᵥ zwischen 210° und 280° und eine Sättigung von mindestens 1 aufweist.

7. Mehrfarben-Druckverfahren nach einem der vorangehenden Ansprüche, wobei im CIELAB-Farbsystem die rote Druckfarbe Chroma-Werte aufweist, die mindestens 30 betragen und/oder höher sind als die Chroma-Werte der grünen Druckfarbe.

8. Mehrfarben-Druckverfahren nach einem der vorangehenden Ansprüche, wobei im CIELAB-Farbsystem die rote Druckfarbe einen Farbtonwinkel h zwischen 18 und 28 aufweist.

9. Mehrfarben-Druckverfahren nach einem der vorangehenden Ansprüche, wobei als das Substrat ein schwarzes Papier verwendet wird.

10. Mehrfarben-Druckverfahren nach einem der vorangehenden Ansprüche, wobei diejenige Oberfläche des Substrats, auf welche das Mehrfarben-Gesamtdruckbild aufgebracht wird, einen Rz-Wert von maximal 10 µm aufweist.

11. Mehrfarben-Druckverfahren nach einem der vorangehenden Ansprüche, wobei das Sieb jeder der Druckformen flach ist, wobei das Substrat für das Erzeugen der Einfarben-Druckbilder über eine sich drehende zylindrische Rolle geführt wird, während gleichzeitig das Sieb mit einer Geschwindigkeit relativ zur zylindrischen Rolle bewegt wird, welche einer Umfangsgeschwindigkeit der zylindrischen Rolle entspricht.

12. Mehrfarben-Druckverfahren nach einem der Ansprüche 1 bis 10, wobei jede der Druckformen zylindrisch ist, wobei das Sieb (123) zylindrisch ist, wobei die Druckfarbe ins Innere des zylindrischen Siebs (123) zugeführt wird und durch Sieböffnungen des Siebs nach aussen gedrückt wird, während das Substrat (30) durch eine Gegenwalze (127) gegen eine äussere Oberfläche des zylindrischen Siebs (123) gedrückt wird, um das Einfarben-Druckbild zu erzeugen.

13. Mehrfarben-Druckverfahren nach Anspruch 12, wobei das zylindrische Sieb mindestens 100 Öffnungen/cm aufweist, wobei mindestens eine der Druckfarben eine UV-härtbares Bindemittel aufweist, und wobei das Substrat anschliessend an das Erzeugen des Einfarben-Druckbildes mit Ultraviolettstrahlung bestrahlt wird.

14. Mehrfarben-Druckverfahren nach einem der vorangehenden Ansprüche, wobei für das Erzeugen der Schablonen für die Einfarben-Druckbilder Bilddaten mit dem zu erzeugenden Gesamtdruckbild farbinvertiert werden, anschliessend eine Farbseparation in die Farben cyan, magenta, gelb und schwarz vorgenommen wird, und das Resultat der Farbseparation als Farbseparation für die Druckfarben rot, grün, blau und weiss abgespeichert wird, wobei anschliessend die Schablone zu jeder Druckfarbe anhand der Farbseparation für diese Druckfarbe hergestellt wird.

15. Mehrfarben-Druckverfahren nach Anspruch 14, wobei vor der Farbseparation die Bilddaten so modifiziert werden, dass pro bunter Bildteilfläche maximal zwei der drei Buntfarben rot, grün, blau beziehungsweise cyan, magenta, gelb vorhanden sind.
